# EUROPEAN PATENT APPLICATION

(11) **EP 4 835 320 A1**
(43) Date of publication of application: **04.11.2026**
(21) Application number: 24909904.5
(22) Date of filing: 27.08.2024
(51) Int. Cl.: F16F 9/06, F16F 9/32

(54) **SHOCK ABSORBER, SUSPENSION SYSTEM AND VEHICLE**

(30) Priority: 29.12.2023 CN 202311862333
(71) Applicant: BYD Company Limited, Shenzhen, Guangdong 518118 (CN)
(72) Inventor: LU, Jieyu, Shenzhen, Guangdong 518118 (CN); TANG, Congming, Shenzhen, Guangdong 518118 (CN); GUO, Xueliang, Shenzhen, Guangdong 518118 (CN); ZHANG, Derui, Shenzhen, Guangdong 518118 (CN); GE, Jiangman, Shenzhen, Guangdong 518118 (CN)
(74) Representative: Mathys & Squire
(86) International application number: PCT/CN2024/114864
(87) International publication number: WO 2025/138954

(57) **Abstract**

A vehicle is provided. The vehicle includes a chassis, and the chassis includes a damper. The damper includes a housing, a piston assembly, a first adjustable damping valve, a second adjustable damping valve, and a communicating member. A fluid reservoir chamber and a working chamber located on a radial inner side of the fluid reservoir chamber are defined in the housing. The piston assembly divides the working chamber into a first working sub-chamber communicating with the fluid reservoir chamber, and a second working sub-chamber. The first adjustable damping valve has a first valve port and a second valve port and is configured to adjust flow damping between the first valve port and the second valve port. The second adjustable damping valve has a third valve port and a fourth valve port and is configured to adjust flow damping between the third valve port and the fourth valve port. A first communicating passage communicating with the second working sub-chamber and the first valve port, a second communicating passage communicating with the fluid reservoir chamber and the third valve port, and a third communicating passage communicating with the second valve port and the fourth valve port are formed on the communicating member.

## Description

### CROSS-REFERENCE TO RELATED APPLICATIONS

The present disclosure claims priority to Chinese Patent Application No. 202311862333.0, filed with the China National Intellectual Property Administration on December 29, 2023 and entitled "DAMPER, SUSPENSION SYSTEM, AND VEHICLE", which is incorporated herein by reference in its entirety.

### TECHNICAL FIELD

The present disclosure relates to the field of vehicle technologies, and in particular, to a damper, a suspension system, and a vehicle.

### BACKGROUND

A damper is a device for accelerating attenuation of vibrations of a frame and a vehicle body to improve riding comfort of a vehicle. A damper in the related art has a complex structure, relatively large volume, and relatively heavy weight, which is unfavorable for manufacturing, processing, and use of the damper.

### SUMMARY

The present disclosure aims to resolve at least one of the technical problems existing in the related art. Therefore, an objective of the present disclosure is to provide a damper. The damper has a simple structure, relatively small volume, and light weight with less material consumption, which facilitates manufacturing, processing, and use of the damper.

Another objective of the present disclosure is to provide a suspension system using the damper.

Yet another objective of the present disclosure is to provide a vehicle using the suspension system.

The damper according to an embodiment of a first aspect of the present disclosure includes a housing, a fluid reservoir chamber and a working chamber being defined in the housing, and the working chamber being located on a radial inner side of the fluid reservoir chamber; a piston assembly, the piston assembly being movably disposed in the working chamber, the piston assembly dividing the working chamber into a first working sub-chamber and a second working sub-chamber, and the first working sub-chamber communicating with the fluid reservoir chamber; a first adjustable damping valve and a second adjustable damping valve, the first adjustable damping valve having a first valve port and a second valve port, the first adjustable damping valve being configured to adjust flow damping between the first valve port and the second valve port, the second adjustable damping valve having a third valve port and a fourth valve port, and the second adjustable damping valve being configured to adjust flow damping between the third valve port and the fourth valve port; and a communicating member, a first communicating passage, a second communicating passage, and a third communicating passage being formed in the communicating member, the first communicating passage communicating with the second working sub-chamber and the first valve port, the second communicating passage communicating with the fluid reservoir chamber and the third valve port, the third communicating passage communicating with the second valve port and the fourth valve port, the third communicating passage unidirectionally communicating with the second communicating passage, and the third communicating passage unidirectionally communicating with the first communicating passage.

According to the damper according to the embodiment of the first aspect of the present disclosure, the communicating member is provided, so that communication between the first adjustable damping valve and the second adjustable damping valve, and communication between the first adjustable damping valve and the second adjustable damping valve and an interior of the housing, are implemented, which facilitates flow of fluid in the housing and between the first adjustable damping valve and the second adjustable damping valve during operation of the damper, thereby facilitating normal use of the damper. In addition, a structure of the damper is simplified, a volume of the damper is reduced, and a weight of the damper is decreased, which facilitates manufacturing, processing, and use of the damper, and can also reduce production costs of the damper. In addition, the arrangement of the first communicating passage, the second communicating passage, and the third communicating passage in the communicating member is suitable, which enables one of the first adjustable damping valve and the second adjustable damping valve of the damper to control compression, and the other of the first adjustable damping valve and the second adjustable damping valve to control rebound. In addition, the damping force can be individually adjusted, thereby improving use performance of the damper.

According to some embodiments of the present disclosure, a first unidirectional communication member is provided between the communicating member and the first adjustable damping valve. A second unidirectional communication member is provided between the communicating member and the second adjustable damping valve. The damper has a compression state and a rebound state. When the damper is in the compression state, the piston assembly compresses the second working sub-chamber, and fluid in the second working sub-chamber flows through the first communicating passage to the first valve port, then flows through an interior of the first adjustable damping valve from the second valve port to the third communicating passage, then enters the second communicating passage through the second unidirectional communication member, and finally flows into the first working sub-chamber through the fluid reservoir chamber. When the damper is in the rebound state, the piston assembly compresses the first working sub-chamber, and fluid in the first working sub-chamber flows through the fluid reservoir chamber and flows to the third valve port through the second communicating passage, then flows through an interior of the second adjustable damping valve from the fourth valve port to the third communicating passage, then enters the first communicating passage through the first unidirectional communication member, and then flows into the second working sub-chamber.

According to some embodiments of the present disclosure, the communicating member is disposed on the housing, and the communicating member is located on a side of the second working sub-chamber away from the first working sub-chamber.

According to some embodiments of the present disclosure, the housing includes a first housing and a second housing sequentially nested from outside to inside. The fluid reservoir chamber is defined between the first housing and the second housing, and the working chamber is defined in the second housing.

According to some embodiments of the present disclosure, a fitting groove is formed in the communicating member. One end of the first communicating passage and one end of the second communicating passage extend through a bottom wall of the fitting groove. The second housing extends into the fitting groove, and a side wall of the second housing separates the end of the first communicating passage from the end of the second communicating passage.

According to some embodiments of the present disclosure, a plurality of fitting protrusions circumferentially spaced apart from each other are disposed on a side wall of the fitting groove, and the side wall of the second housing is fitted on inner peripheral sides of the plurality of fitting protrusions. A clearance flow passage is defined between two adjacent fitting protrusions, and the fluid reservoir chamber communicates with the second communicating passage through the clearance flow passage.

According to some embodiments of the present disclosure, the end of the second communicating passage is located between the end of the first communicating passage and the fitting protrusion in a radial direction of the housing.

According to some embodiments of the present disclosure, the first communicating passage includes a first passage segment and a second passage segment in communication with each other. The first passage segment extends in an axial direction of the housing, and a free end of the first passage segment communicates with the second working sub-chamber. The second passage segment extends in the radial direction of the housing, and a free end of the second passage segment communicates with the first valve port.

According to some embodiments of the present disclosure, the second communicating passage includes a third passage segment and a fourth passage segment in communication with each other. The third passage segment extends in the axial direction of the housing, and a free end of the third passage segment communicates with the fluid reservoir chamber. The third passage segment is spaced apart from the first passage segment in a direction perpendicular to the axial direction of the housing. The fourth passage segment extends in the radial direction of the housing, and a free end of the fourth passage segment communicates with the third valve port and extends away from the free end of the second passage segment.

According to some embodiments of the present disclosure, the third communicating passage is located on a side of each of the first communicating passage and the second communicating passage that is away from the second working sub-chamber.

According to some embodiments of the present disclosure, both the first adjustable damping valve and the second adjustable damping valve are connected to the communicating member.

According to some embodiments of the present disclosure, the first adjustable damping valve and the second adjustable damping valve are opposite to each other in the radial direction of the housing.

According to some embodiments of the present disclosure, a volume of the third communicating passage is adjustable. When the damper operates, the volume of the third communicating passage changes with pressure of the third communicating passage.

According to some embodiments of the present disclosure, the damper further includes a gas compression device. The gas compression device is disposed on the communicating member, and the gas compression device has compressed gas therein. The gas compression device is configured such that the compressed gas is compressed when fluid pressure in the third communicating passage increases, and the compressed gas rebounds when the fluid pressure in the third communicating passage decreases.

According to some embodiments of the present disclosure, the gas compression device includes an outer housing, the outer housing being connected to a side of the communicating member away from the housing, and the outer housing and the communicating member jointly defining the third communicating passage; and a floating piston, the floating piston being movably disposed in the outer housing, the floating piston dividing the third communicating passage into a communicating member communicating passage and a compressed gas chamber, the communicating member communicating passage unidirectionally communicating with the second communicating passage, the communicating member communicating passage unidirectionally communicating with the first communicating passage, and the compressed gas being located in the compressed gas chamber.

According to some embodiments of the present disclosure, the gas compression device is an accumulator, an air bag, or a bellows.

According to some embodiments of the present disclosure, at least one through-hole is formed in the housing, and the fluid reservoir chamber communicates with the first working sub-chamber through the through-hole.

According to some embodiments of the present disclosure, there are a plurality of through-holes, and at least two of the plurality of through-holes are staggered in both a circumferential direction and an axial direction of the working chamber.

According to some embodiments of the present disclosure, the through-hole is located on a side of a maximum stroke position of the piston assembly when compressing the first working sub-chamber that is away from the second working sub-chamber.

A suspension system according to an embodiment of a second aspect of the present disclosure includes the damper according to the embodiment of the first aspect.

A vehicle according to an embodiment of a third aspect of the present disclosure includes the damper according to the embodiment of the first aspect or the suspension system according to the embodiment of the second aspect.

Additional aspects and advantages of the present disclosure are to be partially provided in the following description, and partially become evident in the following description, or be understood through the practice of the present disclosure.

### BRIEF DESCRIPTION OF DRAWINGS

The foregoing and/or additional aspects and advantages of the present disclosure are to become apparent and readily understandable from the description of the embodiments with reference to the following accompanying drawings.
FIG. 1 is a schematic diagram of a damper according to an embodiment of the present disclosure;
FIG. 2 is a partial schematic diagram of a damper according to an embodiment of the present disclosure;
FIG. 3 is a schematic diagram of a communicating member of a damper according to an embodiment of the present disclosure;
FIG. 4 is a cross-sectional view of a communicating member of a damper according to an embodiment of the present disclosure;
FIG. 5 is a top view of a communicating member of a damper according to an embodiment of the present disclosure;
FIG. 6 is a side view of a communicating member of a damper according to an embodiment of the present disclosure;
FIG. 7 is a schematic diagram of a second housing of a damper according to an embodiment of the present disclosure;
FIG. 8 is a schematic diagram of fluid flow in a compression state of a damper according to an embodiment of the present disclosure;
FIG. 9 is a schematic diagram of fluid flow in a rebound state of a damper according to an embodiment of the present disclosure;
FIG. 10 is a schematic block diagram of a suspension system according to an embodiment of the present disclosure;
FIG. 11 is a schematic block diagram of a vehicle according to an embodiment of the present disclosure; and
FIG. 12 is another schematic block diagram of a vehicle according to an embodiment of the present disclosure.

### Reference numerals:

100: Damper;
1: Housing; 11: First housing; 12: Second housing;
121: Working chamber; 1211: First working sub-chamber; 1212: Second working sub-chamber;
122: Piston assembly; 123: Through-hole; 13: Fluid reservoir chamber;
2: First adjustable damping valve; 21: First valve port; 22: Second valve port; 23: First unidirectional communication member;
3: Second adjustable damping valve; 31: Third valve port; 32: Fourth valve port; 33: Second unidirectional communication member;
4: Communicating member; 41: First communicating passage;
411: First passage segment; 412: Second passage segment;
42: Second communicating passage; 421: Third passage segment; 422: Fourth passage segment;
43: Third communicating passage; 431: Communicating member communicating passage;
44: Fitting groove; 441: Fitting protrusion; 442: Clearance flow passage;
5: Gas compression device; 51: Outer housing;
5111: Compressed gas chamber; 512: Inflation port; 52: Floating piston;
1000: Suspension system; 2000: Vehicle.

### DESCRIPTION OF EMBODIMENTS

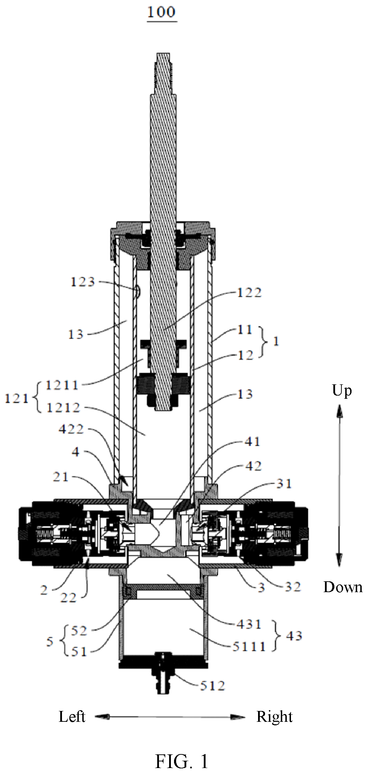

The following describes in detail embodiments of the present disclosure. The embodiments described with reference to the accompanying drawings are exemplary. Referring to FIG. 1 to FIG. 9, the following describes a damper 100 according to an embodiment of a first aspect of the present disclosure.

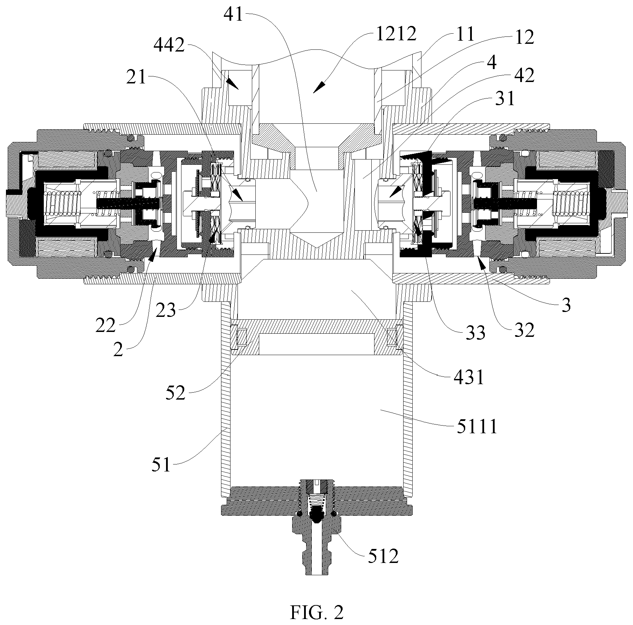

As shown in FIG. 1 and FIG. 2, the damper 100 according to the embodiment of the first aspect of the present disclosure includes a housing 1, a first adjustable damping valve 2, a second adjustable damping valve 3, and a communicating member 4.

Specifically, a fluid reservoir chamber 13 and a working chamber 121 are defined in the housing 1. The working chamber 121 is located on a radial inner side of the fluid reservoir chamber 13. A piston assembly 122 is movably disposed in the working chamber 121. The piston assembly 122 divides the working chamber 121 into a first working sub-chamber 1211 and a second working sub-chamber 1212, and the first working sub-chamber 1211 communicates with the fluid reservoir chamber 13.

For example, in examples of FIG. 1 and FIG. 2, in a radial direction of the housing 1 toward a center of the housing 1, the fluid reservoir chamber 13 and the working chamber 121 are arranged in sequence. The first working sub-chamber 1211 and the second working sub-chamber 1212 are opposite to each other in an up-down direction, and the piston assembly 122 can move in an axial direction of the housing 1 (that is, the up-down direction in FIG. 1). For example, when the piston assembly 122 moves upward, a volume of the first working sub-chamber 1211 decreases, and fluid in the first working sub-chamber 1211 can flow into the fluid reservoir chamber 13. In such an arrangement, the housing 1 has a simple structure and a relatively small weight, and the housing 1 is radially divided into only two spaces, thereby simplifying a structure of the damper 100, reducing a volume of the damper 100, and further facilitating manufacturing and processing of the damper 100.

With reference to FIG. 1 and FIG. 2, the first adjustable damping valve 2 has a first valve port 21 and a second valve port 22. The first adjustable damping valve 2 is configured to adjust flow damping between the first valve port 21 and the second valve port 22. The second adjustable damping valve 3 has a third valve port 31 and a fourth valve port 32, and the second adjustable damping valve 3 is configured to adjust flow damping between the third valve port 31 and the fourth valve port 32. A first communicating passage 41, a second communicating passage 42, and a third communicating passage 43 are formed in the communicating member 4. The first communicating passage 41 communicates with the second working sub-chamber 1212 and the first valve port 21. The second communicating passage 42 communicates with the fluid reservoir chamber 13 and the third valve port 31. The third communicating passage 43 communicates with the second valve port 22 and the fourth valve port 32. The third communicating passage 43 unidirectionally communicates with the second communicating passage 42, and the third communicating passage 43 unidirectionally communicates with the first communicating passage 41.

For example, in the examples of FIG. 1 and FIG. 2, the first adjustable damping valve 2 can communicate with the second working sub-chamber 1212 through the first valve port 21 and the first communicating passage 41, and the second adjustable damping valve 3 can communicate with the fluid reservoir chamber 13 through the third valve port 31 and the second communicating passage 42. The fluid reservoir chamber 13 communicates with the first working sub-chamber 1211, and the second valve port 22 of the first adjustable damping valve 2 communicates with the fourth valve port 32 of the second adjustable damping valve 3 through the third communicating passage 43. A right side of the third communicating passage 43 unidirectionally communicates with the second communicating passage 42, and a left side of the third communicating passage 43 unidirectionally communicates with the first communicating passage 41. Specifically, fluid in the third communicating passage 43 can unidirectionally flow into the second communicating passage 42, but fluid in the second communicating passage 42 cannot flow directly into the third communicating passage 43. The fluid in the third communicating passage 43 can unidirectionally flow into the first communicating passage 41, but fluid in the first communicating passage 41 cannot flow directly into the third communicating passage 43, so as to facilitate flow of fluid among the communicating member 4, the first adjustable damping valve 2, the second adjustable damping valve 3, and the housing 1.

It will be noted that the first communicating passage 41, the second communicating passage 42, and the third communicating passage 43 may be formed in the communicating member 4. In other words, the first communicating passage 41, the second communicating passage 42, and the third communicating passage 43 are defined by the communicating member 4. Alternatively, the first communicating passage 41, the second communicating passage 42, and the third communicating passage 43 may be enclosed by the communicating member 4 and an external member. For example, in this embodiment of this application, the third communicating passage 43 is a space enclosed by the communicating member 4 and an outer housing 51.

In this way, through a skillfully designed flow passage in the communicating member 4 (for example, the first communicating passage 41, the second communicating passage 42, and the third communicating passage 43), one of the first adjustable damping valve 2 and the second adjustable damping valve 3 of the damper 100 controls compression, and the other of the first adjustable damping valve 2 and the second adjustable damping valve 3 controls rebound. In addition, the damping force can be individually adjusted, thereby improving use performance of the damper 100. In addition, flow of fluid in the housing 1 and between the first adjustable damping valve 2 and the second adjustable damping valve 3 during operation of the damper 100 is facilitated, thereby facilitating normal use of the damper 100. In addition, communication between the first adjustable damping valve 2 and the second adjustable damping valve 3, and communication between the first adjustable damping valve 2 and the second adjustable damping valve 3 and an interior of the housing 1 can be implemented through the communicating member 4. Moreover, the structure of the damper 100 is simplified, the volume of the damper 100 is reduced, and the weight of the damper 100 is decreased, which facilitates manufacturing, processing, and use of the damper 100, and can also reduce production costs of the damper 100. For example, a cross-sectional area of each of the first valve port 21, the second valve port 22, the third valve port 31, and the fourth valve port 32 cannot be excessively small, thereby avoiding generating relatively large damping force.

According to the damper 100 according to the embodiment of the first aspect of the present disclosure, the communicating member 4 is provided, so that communication between the first adjustable damping valve 2 and the second adjustable damping valve 3, and communication between the first adjustable damping valve 2 and the second adjustable damping valve 3 and the interior of the housing 1 are implemented, which facilitates flow of the fluid in the housing 1 and between the first adjustable damping valve 2 and the second adjustable damping valve 3 during operation of the damper 100, thereby facilitating normal use of the damper 100. In addition, the structure of the damper 100 is simplified, the volume of the damper 100 is reduced, and the weight of the damper 100 is decreased, which facilitates manufacturing, processing, and use of the damper 100, and can also reduce production costs of the damper 100. In addition, the arrangement of the first communicating passage 41, the second communicating passage 42, and the third communicating passage 43 in the communicating member 4 is suitable, so that one of the first adjustable damping valve 2 and the second adjustable damping valve 3 of the damper 100 controls compression, and the other of the first adjustable damping valve 2 and the second adjustable damping valve 3 controls rebound. Moreover, a damping force can be individually adjusted, thereby improving use performance of the damper 100.

According to some embodiments of the present disclosure, referring to FIG. 1, FIG. 8, and FIG. 9, a first unidirectional communication member 23 is provided between the communicating member 4 and the first adjustable damping valve 2, and a second unidirectional communication member 33 is provided between the communicating member 4 and the second adjustable damping valve 3. The damper 100 has a compression state and a rebound state.

Specifically, when the damper 100 is in the compression state, the piston assembly 122 compresses the second working sub-chamber 1212. Fluid in the second working sub-chamber 1212 flows through the first communicating passage 41 to the first valve port 21, then flows through an interior of the first adjustable damping valve 2 from the second valve port 22 to the third communicating passage 43, then enters the second communicating passage 42 through the second unidirectional communication member 33, and finally flows into the first working sub-chamber 1211 through the fluid reservoir chamber 13.

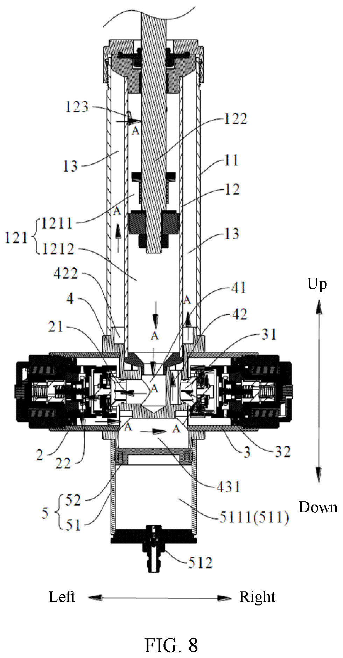

For example, in an example of FIG. 8, when the damper 100 is in the compression state, a flow process (for example, a direction indicated by an arrow A in FIG. 8) of fluid in the damper 100 is as follows: the piston assembly 122 moves downward to compress the second working sub-chamber 1212. In this case, a volume of the second working sub-chamber 1212 decreases, and a volume of the first working sub-chamber 1211 increases. The fluid in the second working sub-chamber 1212 flows along the first communicating passage 41 to the first valve port 21, flows into the interior of the first adjustable damping valve 2 from the second valve port 22, and then flows from the second valve port 22 to the third communicating passage 43. In a process in which the fluid flows through the first adjustable damping valve 2, the first adjustable damping valve 2 controls and adjusts a damping force, so as to facilitate use of the damper 100. The fluid in the third communicating passage 43 directly enters the second communicating passage 42 through the second unidirectional communication member 33 (for example, the second unidirectional communication member 33 may be a one-way valve). In other words, in the compression state of the damper 100, the second adjustable damping valve 3 only plays a role of communication, and does not play a role of damping adjustment. Then, the fluid in the second communicating passage 42 flows into the first working sub-chamber 1211 through the fluid reservoir chamber 13. In this way, one compression process of the damper 100 is completed.

In such an arrangement, flow of fluid between the second working sub-chamber 1212 and the first working sub-chamber 1211 is relatively smooth, thereby improving use reliability and performance of the damper 100. In addition, the damper 100 has a simple structure and a relatively short flow path, which facilitates manufacturing and processing of the damper 100. When the damper 100 is used in a vehicle, riding comfort of the vehicle can be improved. It will be noted that in the above description, the second unidirectional communication member 33 is disposed on the second adjustable damping valve 3. Certainly, the second unidirectional communication member 33 may alternatively be disposed on the communicating member 4 to implement unidirectional communication between the third communicating passage 43 and the second communicating passage 42.

When the damper 100 is in the rebound state, the piston assembly 122 compresses the first working sub-chamber 1211. Fluid in the first working sub-chamber 1211 flows through the fluid reservoir chamber 13 and flows to the third valve port 31 through the second communicating passage 42, then flows through an interior of the second adjustable damping valve 3 from the fourth valve port 32 to the third communicating passage 43, then enters the first communicating passage 41 through the first unidirectional communication member 23, and then flows into the second working sub-chamber 1212.

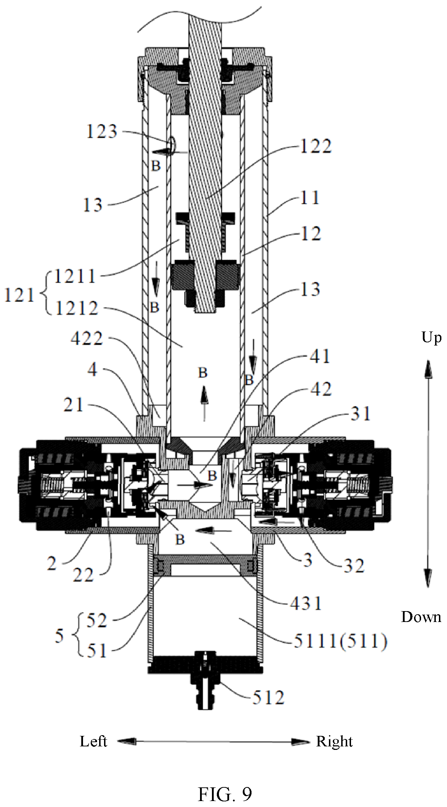

For example, in an example of FIG. 9, when the damper 100 is in the rebound state, a flow process (for example, a direction indicated by an arrow B in FIG. 9) of the fluid in the damper 100 is as follows: the piston assembly 122 moves upward to compress the first working sub-chamber 1211. In this case, the volume of the first working sub-chamber 1211 decreases, and the volume of the second working sub-chamber 1212 increases. The fluid in the first working sub-chamber 1211 flows through the fluid reservoir chamber 13 into the second communicating passage 42, flows along the second communicating passage 42 to the third valve port 31, flows into the interior of the second adjustable damping valve 3 from the third valve port 31, and then flows from the fourth valve port 32 into the third communicating passage 43. In a process in which the fluid flows through the second adjustable damping valve 3, the second adjustable damping valve 3 controls and adjusts a damping force, so as to facilitate use of the damper 100. The fluid in the third communicating passage 43 directly enters the first communicating passage 41 through the first unidirectional communication member 23 (for example, the first unidirectional communication member 23 may be a one-way valve). In other words, in the rebound state of the damper 100, the first adjustable damping valve 2 only plays a role in communication, and does not play a role in damping adjustment. Then, the fluid in the first communicating passage 41 flows into the second working sub-chamber 1212. In this way, one rebound process of the damper 100 is completed.

In this way, through reciprocating movement of the piston assembly 122 within the working chamber 121, the fluid can reciprocate between the first working sub-chamber 1211 and the second working sub-chamber 1212 based on the foregoing flow process, thereby achieving a damping effect of the damper 100. In addition, the first adjustable damping valve 2 of the damper 100 controls compression, and the second adjustable damping valve 3 controls rebound. The first adjustable damping valve 2 and the second adjustable damping valve 3 are controlled and used separately without interfering with each other. In addition, the damping force can be individually adjusted, thereby improving the use performance of the damper 100. It will be noted that in the above description, the first unidirectional communication member 23 is disposed on the first adjustable damping valve 2. Certainly, the first unidirectional communication member 23 may alternatively be disposed on the communicating member 4 to implement unidirectional communication between the third communicating passage 43 and the first communicating passage 41.

According to some embodiments of the present disclosure, referring to FIG. 1 and FIG. 2, the communicating member 4 is disposed on the housing 1, and the communicating member 4 is located on a side of the second working sub-chamber 1212 away from the first working sub-chamber 1211. For example, in the examples of FIG. 1 and FIG. 2, the communicating member 4 is connected to a lower side of the housing 1, and both the first adjustable damping valve 2 and the second adjustable damping valve 3 are disposed on the lower side of the housing 1 and connected to the communicating member 4. In such an arrangement, the housing 1, the communicating member 4, the first adjustable damping valve 2, and the second adjustable damping valve 3 of the damper 100 are arranged in a suitable configuration, thereby facilitating flow of fluid within the damper 100 and reducing mutual interference among components. In addition, the housing 1 is disposed above the first adjustable damping valve 2 and the second adjustable damping valve 3, and the housing 1 has a simple structure therein and a relatively small quantity of components, which improves overall use stability of the damper 100, thereby facilitating long-term and stable use of the damper 100.

Optionally, referring to FIG. 1 and FIG. 2, the housing 1 includes a first housing 11 and a second housing 12 sequentially nested from outside to inside. The fluid reservoir chamber 13 is defined between the first housing 11 and the second housing 12, and the working chamber 121 is defined in the second housing 12. For example, in the examples of FIG. 1 and FIG. 2, the second housing 12 is located on a radial inner side of the first housing 11, and the first housing 11 and the second housing 12 may be configured as cylindrical structures. In this way, the first housing 11 and the second housing 12 divide the housing 1 into two spaces, thereby simplifying the structure of the damper 100.

According to some embodiments of the present disclosure, referring to FIG. 1, FIG. 3, and FIG. 4, a fitting groove 44 is formed in the communicating member 4. One end of the first communicating passage 41 and one end of the second communicating passage 42 extend through a bottom wall of the fitting groove 44. The second housing 12 extends into the fitting groove 44, and a side wall of the second housing 12 separates the end of the first communicating passage 41 from the end of the second communicating passage 42. For example, in the examples of FIG. 1, FIG. 3, and FIG. 4, the fitting groove 44 is formed in an upper side surface of the communicating member 4. An upper end of the first communicating passage 41 and an upper end of the second communicating passage 42 extend through the bottom wall of the fitting groove 44. A lower end of the second housing 12 extends into the fitting groove 44 and separates the upper end of the first communicating passage 41 from the upper end of the second communicating passage 42. In this way, the first communicating passage 41 and the second communicating passage 42 do not communicate with each other, so as to facilitate smooth flow of fluid, thereby improving the use reliability of the damper 100. In addition, the fitting groove 44 provides a positioning function for the lower end of the second housing 12, so as to facilitate rapid assembly of the second housing 12 and the communicating member 4.

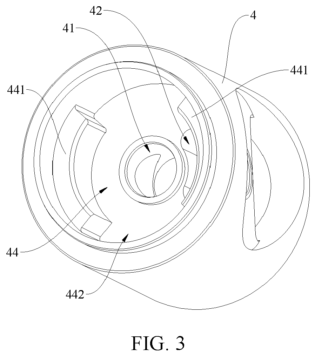

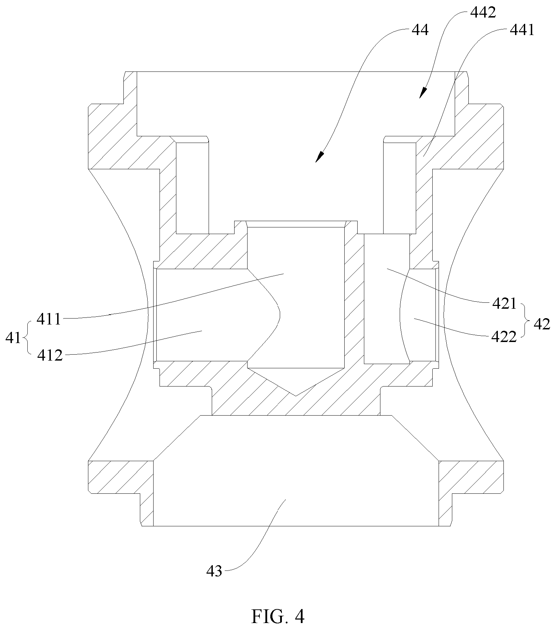

According to some embodiments of the present disclosure, referring to FIG. 3 and FIG. 4, a plurality of fitting protrusions 441 circumferentially spaced apart from each other are disposed on a side wall of the fitting groove 44, and the side wall of the second housing 12 is fitted on inner peripheral sides of the plurality of fitting protrusions 441. In the description of the present disclosure, "a plurality of" means two or more. For example, in the examples of FIG. 3 and FIG. 4, two fitting protrusions 441 are disposed on the side wall of the fitting groove 44, and each fitting protrusion 441 extends in a circumferential direction of the fitting groove 44. An outer circumferential surface of a lower portion of the second housing 12 is fitted on inner peripheral sides of the two fitting protrusions 441. In such an arrangement, the fitting protrusion 441 provides a limiting function for the lower end of the second housing 12, to limit radial movement of the second housing 12. In addition, the fitting protrusion 441 provides a guiding function for the lower end of the second housing 12, so that the lower end of the second housing 12 extends into the fitting groove 44.

With reference to FIG. 3 and FIG. 4, a clearance flow passage 442 is defined between two adjacent fitting protrusions 441. The fluid reservoir chamber 13 communicates with the second communicating passage 42 through the clearance flow passage 442. In such an arrangement, fluid flowing out from the upper end of the second communicating passage 42 can flow into the fluid reservoir chamber 13 after passing through the clearance flow passage 442, thereby effectively using a space within the fitting groove 44 on the communicating member 4, and further facilitating flow of fluid between the communicating member 4 and the housing 1.

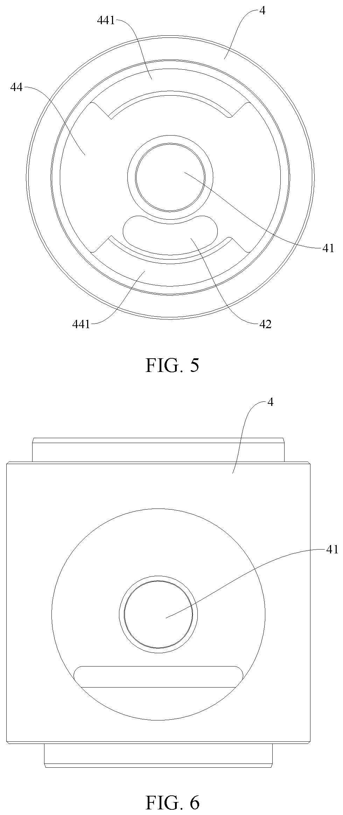

According to some embodiments of the present disclosure, referring to FIG. 1 to FIG. 4, one end of the second communicating passage 42 is located between one end of the first communicating passage 41 and the fitting protrusion 441 in the radial direction of the housing 1. For example, in the examples of FIG. 4 and FIG. 5, from a middle of the communicating member 4 toward an outer circumferential surface of the communicating member 4, the first communicating passage 41, the second communicating passage 42, and the fitting protrusion 441 are arranged in sequence. In such an arrangement, the first communicating passage 41, the second communicating passage 42, and the fitting protrusion 441 are arranged in a suitable configuration, so that space inside the communicating member 4 can be effectively used, which makes the arrangement of the communicating member 4 relatively compact and improves use performance of the communicating member 4.

According to some embodiments of the present disclosure, referring to FIG. 1, FIG. 2, and FIG. 4, the first communicating passage 41 includes a first passage segment 411 and a second passage segment 412 communicating with each other. The first passage segment 411 extends in the axial direction of the housing 1, and a free end of the first passage segment 411 communicates with the second working sub-chamber 1212. The second passage segment 412 extends in the radial direction of the housing 1, and a free end of the second passage segment 412 communicates with the first valve port 21. For example, in the examples of FIG. 1, FIG. 2, and FIG. 4, the first passage segment 411 extends in an up-down direction. An upper end of the first passage segment 411 extends through the bottom wall of the fitting groove 44, and a lower end of the first passage segment 411 communicates with a right end of the second passage segment 412. The second passage segment 412 extends in a left-right direction, and a left end of the second passage segment 412 extends through the outer circumferential surface of the communicating member 4 and communicates with the first valve port 21. In such a disposition, the first communicating passage 41 has a simple structure, which facilitates manufacturing and processing of the communicating member 4. In addition, both the first passage segment 411 and the second passage segment 412 extend along a straight line, which can shorten a flow path of the fluid in the first communicating passage 41, so as to facilitate flow of the fluid from the second working sub-chamber 1212 to the first valve port 21, thereby further facilitating the use of the damper 100.

Further, with reference to FIG. 1, FIG. 2, and FIG. 4, the second communicating passage 42 includes a third passage segment 421 and a fourth passage segment 422 communicating with each other. The third passage segment 421 extends in the axial direction of the housing 1, and a free end of the third passage segment 421 communicates with the fluid reservoir chamber 13. The third passage segment 421 is spaced apart from the first passage segment 411 in a direction perpendicular to the axial direction of the housing 1. The fourth passage segment 422 extends in the radial direction of the housing 1, and a free end of the fourth passage segment 422 communicates with the third valve port 31 and extends away from the free end of the second passage segment 412.

For example, in the examples of FIG. 1, FIG. 2, and FIG. 4, the third passage segment 421 extends in the up-down direction. An upper end of the third passage segment 421 extends through the bottom wall of the fitting groove 44 and communicates with the fluid reservoir chamber 13, and a lower end of the third passage segment 421 communicates with a left end of the fourth passage segment 422. The fourth passage segment 422 extends in the left-right direction. A right end of the fourth passage segment 422 extends through the outer circumferential surface of the communicating member 4 and communicates with the third valve port 31. The fourth passage segment 422 and the second passage segment 412 are spaced apart from each other in the radial direction of the communicating member 4. In such an arrangement, the second communicating passage 42 has a simple structure, which facilitates manufacturing and processing of the communicating member 4. In addition, both the third passage segment 421 and the fourth passage segment 422 extend along a straight line, which can shorten a flow path of the fluid in the second communicating passage 42, so as to facilitate flow of the fluid from the third valve port 31 to the fluid reservoir chamber 13, thereby further facilitating the use of the damper 100.

According to some embodiments of the present disclosure, referring to FIG. 1, FIG. 2, and FIG. 4, the third communicating passage 43 is located on a side of each of the first communicating passage 41 and the second communicating passage 42 away from the second working sub-chamber 1212. For example, in the examples of FIG. 1, FIG. 2, and FIG. 4, the third communicating passage 43 is located on a lower side of each of the first communicating passage 41 and the second communicating passage 42. In such an arrangement, a position of the third communicating passage 43 is suitably arranged. The third communicating passage 43 does not easily interfere with the second working sub-chamber 1212, which facilitates the flow of fluid in the communicating member 4. In addition, a layout of the third communicating passage 43, the first communicating passage 41, and the second communicating passage 42 is designed based on the flow path of the fluid, so as to further facilitate the use of the communicating member 4.

According to some embodiments of the present disclosure, referring to FIG. 1 and FIG. 2, both the first adjustable damping valve 2 and the second adjustable damping valve 3 are connected to the communicating member 4. For example, in the examples of FIG. 1 and FIG. 2, the first adjustable damping valve 2 and the second adjustable damping valve 3 are separately connected to the outer circumferential surface of the communicating member 4, so that the first adjustable damping valve 2 and the second adjustable damping valve 3 separately communicate with an interior of the communicating member 4. Moreover, the first adjustable damping valve 2 and the second adjustable damping valve 3 can communicate with each other through the third communicating passage 43, so as to facilitate smooth flow of fluid between the first adjustable damping valve 2 and the second adjustable damping valve 3. In addition, the flow path is relatively short, and flow is smoother.

Optionally, with reference to FIG. 1 and FIG. 2, the first adjustable damping valve 2 and the second adjustable damping valve 3 are opposite to each other in the radial direction of the housing 1. For example, in the examples of FIG. 1 and FIG. 2, the first adjustable damping valve 2 and the second adjustable damping valve 3 are located on two sides of the communicating member 4 in the radial direction, and the first adjustable damping valve 2 and the second adjustable damping valve 3 are in the same horizontal direction. In such an arrangement, a distance between the first adjustable damping valve 2 and the second adjustable damping valve 3 is relatively short, which further facilitates flow of fluid between the first adjustable damping valve 2 and the second adjustable damping valve 3. In addition, an overall structure of the damper 100 is more stable, thereby improving stability of the damper 100 during use of the damper.

According to some embodiments of the present disclosure, referring to FIG. 1 and FIG. 2, a volume of the third communicating passage 43 is adjustable. When the damper 100 operates, the volume of the third communicating passage 43 changes with pressure in the third communicating passage 43. For example, when the damper 100 is in the compression state, the piston assembly 122 moves downward, fluid flows into the third communicating passage 43, the pressure in the third communicating passage 43 increases, and the volume of the third communicating passage 43 increases. When the damper 100 is in the rebound state, the piston assembly 122 moves upward to compress the first working sub-chamber 1211, a volume occupied by the piston assembly 122 in the working chamber 121 decreases, the pressure in the third communicating passage 43 decreases, and the volume of the third communicating passage 43 decreases. The fluid, for example, oil, is incompressible. Therefore, the volume of the third communicating passage 43 is set to be adjustable, and the volume of the third communicating passage 43 can change correspondingly based on a flow condition of the fluid, so as to facilitate flow of the fluid in the damper 100, thereby facilitating normal operation of the damper 100. It will be noted that the fluid in the housing 1, the communicating member 4, the first adjustable damping valve 2, and the second adjustable damping valve 3 is only oil, and no gas is present.

According to some embodiments of the present disclosure, referring to FIG. 1 and FIG. 2, the damper 100 further includes a gas compression device 5. The gas compression device 5 is disposed on the communicating member 4, and the gas compression device 5 has compressed gas therein. The gas compression device 5 is configured such that the compressed gas is compressed when fluid pressure in the third communicating passage 43 increases, and the compressed gas rebounds when the fluid pressure in the third communicating passage 43 decreases. For example, in the examples of FIG. 1 and FIG. 2, the gas compression device 5 is disposed on a side of the communicating member 4 away from the housing 1. In such an arrangement, the gas compression device 5 can change with the pressure in the third communicating passage 43, for example, the gas is compressed and rebounds, so as to achieve oil-gas separation of the damper 100. In other words, no gas exists in any position of the damper 100 except inside the gas compression device 5, which avoids a problem that a damping force instantaneously decreases when gas enters the first adjustable damping valve 2 and the second adjustable damping valve 3.

According to some embodiments of the present disclosure, referring to FIG. 1 and FIG. 2, the gas compression device 5 includes an outer housing 51 and a floating piston 52. The outer housing 51 is connected to the side of the communicating member 4 away from the housing 1, and the outer housing 51 and the communicating member 4 jointly define the third communicating passage 43. The floating piston 52 is movably disposed in the outer housing 51. The floating piston 52 divides the third communicating passage 43 into a communicating member communicating passage 431 and a compressed gas chamber 5111. The communicating member communicating passage 431 unidirectionally communicates with the second communicating passage 42, and the communicating member communicating passage 431 unidirectionally communicates with the first communicating passage 41. The compressed gas is located in the compressed gas chamber 5111.

For example, in the examples of FIG. 1 and FIG. 2, an upper side of the outer housing 51 is connected to a lower side of the communicating member 4, and the outer housing 51 and the communicating member 4 jointly define the third communicating passage 43. The floating piston 52 moves up and down in the outer housing 51. An outer circumferential surface of the floating piston 52 is in contact with an inner wall surface of the outer housing 51 to separate the communicating member communicating passage 431 from the compressed gas chamber 5111. The communicating member communicating passage 431 and the compressed gas chamber 5111 are independent of each other. A right side of the communicating member communicating passage 431 unidirectionally communicates with the second communicating passage 42 through the second unidirectional communication member 33, and a left side of the communicating member communicating passage 431 unidirectionally communicates with the first communicating passage 41 through the first unidirectional communication member 23. When pressure in the communicating member communicating passage 431 increases, the floating piston 52 moves downward so that the compressed gas is compressed. When the pressure in the communicating member communicating passage 431 decreases, pressure in the compressed gas chamber 5111 is greater than the pressure in the third communicating passage 43, the floating piston 52 moves upward, and the compressed gas in the compressed gas chamber 5111 rebounds. In this way, through cooperation of the outer housing 51 and the floating piston 52, while normal flow of the fluid is ensured, oil-gas separation in the damper 100 is effectively achieved, so as to facilitate adjustment and control of the damping force by the first adjustable damping valve 2 and the second adjustable damping valve 3. In addition, the outer housing 51 and the floating piston 52 each have a simple structure and low use costs, thereby reducing difficulty in manufacturing and processing the damper 100 and lowering production costs of the damper 100.

For example, the compressed gas chamber 5111 communicates with an exterior of the outer housing 51 in at least the following three configurations: first, an inflation port 512 is provided at a bottom of the outer housing 51. The damper 100 can pre-charge the compressed gas chamber 5111 with gas at a specific pressure through the inflation port 512 based on a chosen pressure, or can discharge gas from the compressed gas chamber 5111 through the inflation port 512, thereby adjusting an initial pressure in the compressed gas chamber 5111. Second, the compressed gas chamber 5111 can directly communicate with the external atmosphere. When the pressure in the communicating member communicating passage 431 increases, the compressed gas chamber 5111 is compressed so that gas in the compressed gas chamber 5111 is discharged. When the pressure in the communicating member communicating passage 431 decreases, the external atmosphere flows into the compressed gas chamber 5111. Third, the compressed gas chamber 5111 is a closed space, and the compressed gas chamber 5111 has compressed gas therein. In this way, through different configurations, a volume of the communicating member communicating passage 431 can correspondingly change based on the flow condition of the fluid, so as to facilitate the flow of the fluid in the damper 100, thereby facilitating normal operation of the damper 100. According to some embodiments of the present disclosure, the gas compression device 5 may be configured as an accumulator, an air bag, or a bellows, but is not limited thereto. In such an arrangement, based on that the accumulator, the air bag, or the bellows is adjustable under pressure, the volume of the third communicating passage 43 can be made adjustable, thereby achieving oil-gas separation in the damper 100. In addition, selectability of the gas compression device 5 is increased, thereby improving the structure of the damper 100 and improving the use performance of the damper 100.

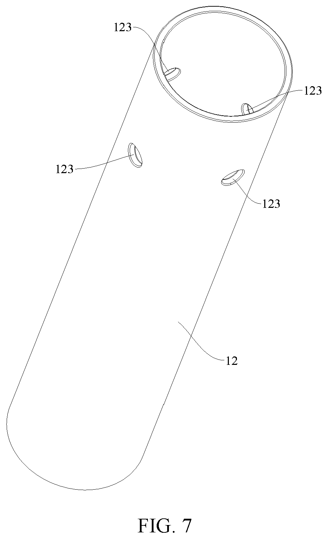

According to some embodiments of the present disclosure, referring to FIG. 1, FIG. 2, and FIG. 7, at least one through-hole 123 is formed in the housing 1, and the fluid reservoir chamber 13 communicates with the first working sub-chamber 1211 through the through-hole 123. For example, in the examples of FIG. 1 and FIG. 7, the through-hole 123 may be formed in the second housing 12. The through-hole 123 extends through an outer circumferential surface and an inner wall surface of the second housing 12 in a radial direction of the second housing 12. A shape of the through-hole 123 may be configured as a circle. In such an arrangement, flow of fluid between the first working sub-chamber 1211 and the fluid reservoir chamber 13 is facilitated, so as to further facilitate the flow of the fluid in the damper 100. It will be noted that the through-hole 123 may alternatively be configured in another shape based on a requirement, to better meet an actual application.

Optionally, referring to FIG. 7, there are a plurality of through-holes 123, and at least two of the plurality of through-holes 123 are staggered in both a circumferential direction and an axial direction of the working chamber 121. For example, in the example of FIG. 7, there are four through-holes 123. The four through-holes 123 are spaced apart from each other in a circumferential direction of the second housing 12, and at least two of the four through-holes 123 are not at the same height of the second housing 12. In such an arrangement, compared with a case that a plurality of through-holes 123 are at the same height of the second housing 12, deformation of a side wall of the second housing 12 due to fluid pressure when fluid flows through the plurality of through-holes 123 can be effectively avoided, thereby improving structural strength of the second housing 12 and prolonging service life of the second housing 12.

According to some embodiments of the present disclosure, the through-hole 123 is located on a side of a maximum stroke position of the piston assembly 122 when compressing the first working sub-chamber 1211 that is away from the second working sub-chamber 1212. In other words, when the piston assembly 122 moves upward to compress the first working sub-chamber 1211, a highest position of the piston assembly 122 in the second housing 12 is lower than a position of the through-hole 123 on the second housing 12. In this way, it can be ensured that during reciprocating movement of the piston assembly 122, the first working sub-chamber 1211 can always communicate with the fluid reservoir chamber 13 through the through-hole 123. This ensures that when the damper 100 is in the rebound state, oil can smoothly flow from the first working sub-chamber 1211 into the fluid reservoir chamber 13 through the through-hole 123, and also prevents the through-hole 123 from damaging a piston valve sealant on the piston assembly 122.

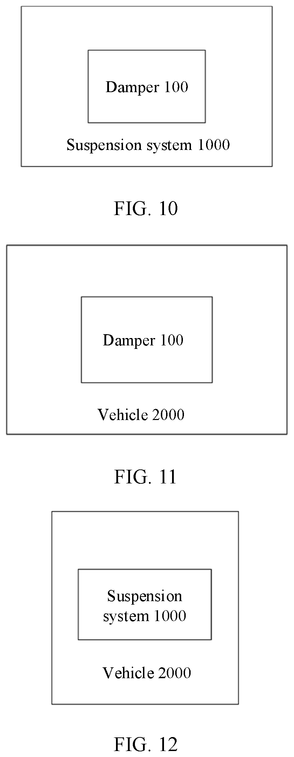

As shown in FIG. 10, a suspension system 1000 according to an embodiment of a second aspect of the present disclosure includes the damper 100 according to the embodiment of the first aspect.

According to the suspension system 1000 according to the embodiment of the second aspect of the present disclosure, the damper 100 is used, so that vibration damping performance is relatively good, and use performance of the suspension system 1000 is improved.

A vehicle 2000 according to an embodiment of a third aspect of the present disclosure includes the damper 100 (as shown in FIG. 11) according to the embodiment of the first aspect or the suspension system 1000 (as shown in FIG. 12) according to the embodiment of the second aspect.

According to the vehicle 2000 according to the embodiment of the third aspect of the present disclosure, the foregoing damper 100 or the suspension system 1000 is used, so that riding comfort of the vehicle 2000 is improved, and use performance of the vehicle 2000 is improved.

Other components and operations of the damper 100, the suspension system 1000, and the vehicle 2000 according to embodiments of the present disclosure are known to a person of ordinary skill in the art, and are not described in detail herein.

In descriptions of the present disclosure, it will be understood that the orientation or positional relationship indicated by the terms "center", "upper", "lower", "left", "right", "vertical", "horizontal", "top", "bottom", "inner", "outer", "axial", "radial", "circumferential", and the like, is an orientation or positional relationship shown based on the accompanying drawings, and is only for ease of describing the present disclosure and simplifying the descriptions, rather than indicating or implying that the apparatus or element indicated must have a specific orientation or be constructed and operated in a specific orientation, and therefore will not be understood as a limitation on the present disclosure.

In the description of this specification, the description with reference to the terms such as "one embodiment", "some embodiments", "an example embodiment", "an example", "a specific example", or "some examples" means that the specific features, structures, materials, or characteristics described with reference to the embodiment or example are included in at least one embodiment or example of the present disclosure. In this specification, illustrative expressions of the foregoing terms do not necessarily refer to the same embodiment or example.

Although the embodiments of the present disclosure are shown and described, a person of ordinary skill in the art will understand that various changes, modifications, replacements, and variations may be made to these embodiments without departing from the principles and objectives of the present disclosure, and the scope of the present disclosure is defined by the claims and equivalents thereof.

## Claims

1. A damper (100), comprising:
a housing (1), a fluid reservoir chamber (13) and a working chamber (121) being defined in the housing (1), and the working chamber (121) being located on a radial inner side of the fluid reservoir chamber (13);
a piston assembly (122), the piston assembly (122) being movably disposed in the working chamber (121), the piston assembly (122) dividing the working chamber (121) into a first working sub-chamber (1211) and a second working sub-chamber (1212), and the first working sub-chamber (1211) communicating with the fluid reservoir chamber (13);
a first adjustable damping valve (2), the first adjustable damping valve (2) having a first valve port (21) and a second valve port (22), and the first adjustable damping valve (2) being configured to adjust flow damping between the first valve port (21) and the second valve port (22);
a second adjustable damping valve (3), the second adjustable damping valve (3) having a third valve port (31) and a fourth valve port (32), and the second adjustable damping valve (3) being configured to adjust flow damping between the third valve port (31) and the fourth valve port (32); and
a communicating member (4), a first communicating passage (41), a second communicating passage (42), and a third communicating passage (43) being formed in the communicating member (4), the first communicating passage (41) communicating with the second working sub-chamber (1212) and the first valve port (21), the second communicating passage (42) communicating with the fluid reservoir chamber (13) and the third valve port (31), the third communicating passage (43) communicating with the second valve port (22) and the fourth valve port (32), the third communicating passage (43) unidirectionally communicating with the second communicating passage (42), and the third communicating passage (43) unidirectionally communicating with the first communicating passage (41).

2. The damper (100) according to claim 1, wherein a first unidirectional communication member (23) is provided between the communicating member (4) and the first adjustable damping valve (2), a second unidirectional communication member (33) is provided between the communicating member (4) and the second adjustable damping valve (3), and the damper (100) has a compression state and a rebound state;
when the damper (100) is in the compression state, the piston assembly (122) compresses the second working sub-chamber (1212), fluid in the second working sub-chamber (1212) flows through the first communicating passage (41) to the first valve port (21), then flows through an interior of the first adjustable damping valve (2) from the second valve port (22) to the third communicating passage (43), then enters the second communicating passage (42) through the second unidirectional communication member (33), and finally flows into the first working sub-chamber (1211) through the fluid reservoir chamber (13); and
when the damper (100) is in the rebound state, the piston assembly (122) compresses the first working sub-chamber (1211), fluid in the first working sub-chamber (1211) flows through the fluid reservoir chamber (13) and flows to the third valve port (31) through the second communicating passage (42), then flows through an interior of the second adjustable damping valve (3) from the fourth valve port (32) to the third communicating passage (43), then enters the first communicating passage (41) through the first unidirectional communication member (23), and then flows into the second working sub-chamber (1212).

3. The damper (100) according to claim 1 or 2, wherein the communicating member (4) is disposed on the housing (1), and the communicating member (4) is located on a side of the second working sub-chamber (1212) away from the first working sub-chamber (1211).

4. The damper (100) according to any one of claims 1 to 3, wherein the housing (1) comprises a first housing (11) and a second housing (12) sequentially nested from outside to inside, the fluid reservoir chamber (13) is defined between the first housing (11) and the second housing (12), and the working chamber (121) is defined in the second housing (12).

5. The damper (100) according to claim 4, wherein a fitting groove (44) is formed in the communicating member (4), one end of the first communicating passage (41) and one end of the second communicating passage (42) extend through a bottom wall of the fitting groove (44), the second housing (12) extends into the fitting groove (44), and a side wall of the second housing (12) separates the end of the first communicating passage (41) from the end of the second communicating passage (42).

6. The damper (100) according to claim 5, wherein a plurality of fitting protrusions (441) circumferentially spaced apart from each other are disposed on a side wall of the fitting groove (44), and the side wall of the second housing (12) is fitted on inner peripheral sides of the plurality of fitting protrusions (441); and
a clearance flow passage (442) is defined between two adjacent fitting protrusions (441), and the fluid reservoir chamber (13) communicates with the second communicating passage (42) through the clearance flow passage (442).

7. The damper (100) according to claim 6, wherein the end of the second communicating passage (42) is located between the end of the first communicating passage (41) and the fitting protrusion (441) in a radial direction of the housing (1).

8. The damper (100) according to any one of claims 1 to 7, wherein the first communicating passage (41) comprises a first passage segment (411) and a second passage segment (412) communicating with each other, the first passage segment (411) extends in an axial direction of the housing (1), a free end of the first passage segment (411) communicates with the second working sub-chamber (1212), the second passage segment (412) extends in the radial direction of the housing (1), and a free end of the second passage segment (412) communicates with the first valve port (21).

9. The damper (100) according to claim 8, wherein the second communicating passage (42) comprises a third passage segment (421) and a fourth passage segment (422) communicating with each other, the third passage segment (421) extends in the axial direction of the housing (1), a free end of the third passage segment (421) communicates with the fluid reservoir chamber (13), the third passage segment (421) is spaced apart from the first passage segment (411) in a direction perpendicular to the axial direction of the housing (1), the fourth passage segment (422) extends in the radial direction of the housing (1), and a free end of the fourth passage segment (422) communicates with the third valve port (31) and extends away from the free end of the second passage segment (412).

10. The damper (100) according to any one of claims 1 to 9, wherein the third communicating passage (43) is located on a side of each of the first communicating passage (41) and the second communicating passage (42) that is away from the second working sub-chamber (1212).

11. The damper (100) according to any one of claims 1 to 10, wherein both the first adjustable damping valve (2) and the second adjustable damping valve (3) are connected to the communicating member (4).

12. The damper (100) according to any one of claims 1 to 11, wherein the first adjustable damping valve (2) and the second adjustable damping valve (3) are opposite to each other in the radial direction of the housing (1).

13. The damper (100) according to any one of claims 1 to 12, wherein a volume of the third communicating passage (43) is adjustable; and
when the damper (100) operates, the volume of the third communicating passage (43) changes with pressure in the third communicating passage (43).

14. The damper (100) according to any one of claims 1 to 13, further comprising:
a gas compression device (5), the gas compression device (5) being disposed on the communicating member (4), the gas compression device (5) having compressed gas therein, and the gas compression device (5) being configured such that the compressed gas is compressed when fluid pressure in the third communicating passage (43) increases, and the compressed gas rebounds when the fluid pressure in the third communicating passage (43) decreases.

15. The damper (100) according to claim 14, wherein the gas compression device (5) comprises:
an outer housing (51), the outer housing (51) being connected to a side of the communicating member (4) away from the housing (1), and the outer housing (51) and the communicating member (4) jointly defining the third communicating passage (43); and
a floating piston (52), the floating piston (52) being movably disposed in the outer housing (51), the floating piston (52) dividing the third communicating passage (43) into a communicating member communicating passage (431) and a compressed gas chamber (5111), the communicating member communicating passage (431) unidirectionally communicating with the second communicating passage (42), the communicating member communicating passage (431) unidirectionally communicating with the first communicating passage (41), and the compressed gas being located in the compressed gas chamber (5111).

16. The damper (100) according to claim 14 or 15, wherein the gas compression device (5) is an accumulator, an air bag, or a bellows.

17. The damper (100) according to any one of claims 1 to 16, wherein at least one through hole (123) is formed in the housing (1), and the fluid reservoir chamber (13) communicates with the first working sub-chamber (1211) through the through hole (123).

18. The damper (100) according to claim 17, wherein there are a plurality of through holes (123), and at least two of the plurality of through holes (123) are staggered in both a circumferential direction and an axial direction of the working chamber (121).

19. The damper (100) according to claim 17 or 18, wherein the through hole (123) is located on a side of a maximum stroke position of the piston assembly (122) when compressing the first working sub-chamber (1211) that is away from the second working sub-chamber (1212).

20. A suspension system (1000), comprising the damper (100) according to any one of claims 1 to 19.

21. A vehicle (2000), comprising the damper (100) according to any one of claims 1 to 19 or the suspension system (1000) according to claim 20.
